# EUROPEAN PATENT APPLICATION

(11) **EP 3 598 209 A1**
(43) Date of publication of application: **22.01.2020**
(21) Application number: 18305983.1
(22) Date of filing: 18.07.2018
(51) Int. Cl.: G02C 7/02, G02C 7/06, G02C 7/10

(54) **METHOD FOR DETERMINING AN OPTHTHALMIC EQUIPMENT AND SYSTEM ASSOCIATED**

(71) Applicant: Essilor International, 94220 Charenton-le-Pont (FR)
(72) Inventor: LE CAIN, Aurelie, 94220 Charenton-le-Pont (FR); FRICKER, Sébastien, 94220 Charenton-le-Pont (FR); BARANTON, Konogan, 94220 Charenton-le-Pont (FR)
(74) Representative: Plasseraud IP

(57) **Abstract**

Method for determining an ophthalmic equipment, the method comprising:
- collecting (S100), for a plurality of reference wearers having worn at least an ophthalmic equipment of the set of predetermined ophthalmic equipments, a first plurality of wearer parameters values,
- creating a plurality of reference datasets (S200), each reference dataset comprising a subset of the first plurality of wearer parameters values, each subset of the first plurality of wearer parameters being different for each reference dataset,
- for each of the reference datasets, determining, a model intended to be used to determine at least an ophthalmic equipment (S300),
- collecting, for a given wearer, a second plurality of wearer parameters (S400),
- selecting, as a function of the second plurality of wearer parameters, a model among the models associated to the plurality of reference datasets (S500),
- based on the selected model, determining at least an ophthalmic equipment (S600).

## Description

### Field of the invention

The present invention relates to the determination of an ophthalmic equipment which provides a good satisfaction to the wearer in terms of performance.

### Background of the invention

An eyewear comprises a plurality of ophthalmic equipments such as the lenses, the post-treatment layers, the frame, etc... For each ophthalmic equipment, the wearer has to choose among a plurality of references and it is difficult to know which ophthalmic equipment will provide a good or the best wearer satisfaction. Today, the eyecare professional plays an essential role in advising the wearer and providing the equipment with the best possible wearer satisfaction.

Unfortunately, the choice of the ophthalmic equipment is based on the feedback of a small population and the choice of the equipment is based on the intuition and experience of the eyecare professional. Further, the eyecare professional may only take into account a limited number of parameters relative to the wearer, which are not necessarily relevant, to orient its choice.

Even if an increasing number of parameters are measured nowadays, it is still difficult to propose an ophthalmic equipment which provides a good wearer satisfaction as the number of wearer parameters to take into account is high compared to the number of parameters available from a feedback of a reference population.

### Presentation of the invention

In view of the above, one aim of the invention is to alleviate at least part of the inconveniences of the prior art.

In particular, one aim of the invention is to provide a method for determining an ophthalmic equipment which provides a good wearer satisfaction.

Another aim of the invention is to provide a method for determining an ophthalmic equipment which is able to establish a link between the parameters relative to the wearer and the parameters of the ophthalmic equipment which provides a good wearer satisfaction.

Another aim of the invention is to provide a method for determining an ophthalmic equipment that is adaptable in function of the wearer parameters provided by the wearer.

To this end, it is proposed, according to a first aspect, a method for determining an ophthalmic equipment among a set of predetermined ophthalmic equipments for a given wearer, the method comprising:
- collecting, for a plurality of reference wearers having worn at least an ophthalmic equipment of the set of predetermined ophthalmic equipments, a first plurality of wearer parameters values, at least an ophthalmic equipment parameter value and a value of at least an evaluation criterion associated to said ophthalmic equipment,
- creating a plurality of reference datasets, each reference dataset comprising a subset of the first plurality of wearer parameters values, the collected at least one ophthalmic equipment parameter value and the collected value of the at least an evaluation criterion associated to each ophthalmic equipment, each subset of the first plurality of wearer parameters being different for each reference dataset,
- for each of the reference datasets, determining, based on the subset of the first plurality of wearer parameters values, the collected at least one ophthalmic equipment parameter value and the collected value of the at least an evaluation criterion associated to each ophthalmic equipment, a model intended to be used to determine at least an ophthalmic equipment,
- collecting, for a given wearer, a second plurality of wearer parameters,
- selecting, as a function of the second plurality of wearer parameters, a model among the models associated to the plurality of reference datasets,
- based on the selected model, determining at least an ophthalmic equipment.

According to an embodiment, determining a model for each of the reference datasets comprises:
* determining a model for predicting the value of at least an evaluation criterion as a function of at least one ophthalmic equipment parameter and the subset of the first plurality of wearer parameters of the considered reference dataset, and
- determining at least an ophthalmic equipment comprises:
   * calculating, for a plurality of ophthalmic equipments having different ophthalmic equipment parameter values, at least a value of an evaluation criterion based on said selected model,
   * selecting one or more ophthalmic equipments having different ophthalmic equipment parameter values based on the calculated evaluation criterion.

According to an embodiment, the method further comprises determining a plurality of ophthalmic equipments and selecting, an ophthalmic equipment among the plurality of the determined ophthalmic equipments.

According to an embodiment, determining a model for each of the reference datasets comprises:
* evaluating a score for each ophthalmic equipment for at least a given subset of the first plurality of wearer parameters,
* establishing a decision tree attributing to a new set of wearer parameters at least an ophthalmic equipment according to the score of an ophthalmic equipment for the new set of wearer parameters, and
   - determining at least an ophthalmic equipment based on the selected model comprises:
      * implementing the decision tree on the second plurality of wearer parameters to determine at least one ophthalmic equipment.

According to an embodiment, collecting a first plurality of wearer parameters and/or collecting a second plurality of wearer parameters comprises:
- providing access to digital content of the wearer,
- analyzing the digital content of the wearer so as to extract wearer parameters.

According to an embodiment, the at least an ophthalmic parameter value and the value of at least an evaluation criterion associated to said ophthalmic equipment relate to a currently worn ophthalmic equipment and wherein the first and the second plurality of wearer parameters comprise data relative to previously worn ophthalmic equipments.

According to an embodiment, the evaluation criterion corresponds to a level of satisfaction, of perceived quality, of performance associated to an ophthalmic equipment.

According to an embodiment, wherein the value of the evaluation criterion is collected directly from a feedback of the wearer or from a measurement.

According to an embodiment, the first and the second plurality of wearer parameters are at least chosen among:
- age,
- gender,
- ethnics,
- employment,
- physiological parameters,
- postural behavior parameters,
- prescription data,
- visual behavior parameters,
- data relative to a sensitivity of the wearer
- data relative to other ophthalmic equipments worn by the given wearer,
- data relative to an activity performed or intended to be performed by the wearer,
- environmental parameters.

According to an embodiment, the at least an ophthalmic equipment parameter is chosen among one or more of:
* a lens parameter
* an optical filter parameter,
* a lens treatment parameter,
* a frame parameter,
* a parameter of a head-mounted display design,
* a parameter relative to the type and/or the control mode of an active lens.

It is also proposed, according to a second aspect, a computer program comprising one or more stored sequence/s of instructions that is accessible to a processor and which, when executed by the processor, causes the processor to carry out the steps of the method previously described.

It is also proposed, according to a third aspect, a storage medium storing one or more stored sequence/s of instructions of the computer program previously described.

It is also proposed, according to a fourth aspect, a system for determining an ophthalmic equipment among a set of predetermined ophthalmic equipments, the system being configured to implement the method previously described and comprising:
- a collecting unit configured to collect, for a given wearer, the second plurality of wearer parameter, and
- a centralized treatment unit configured to:
   * receive from the collecting unit the second plurality of wearer parameters,
   * load, a plurality of models intended to be used to determine at least an ophthalmic equipment, each model being associated to a reference dataset and each model being determined based on the subset of the first plurality of wearer parameters, the at least one ophthalmic equipment parameter and the value of the at least an evaluation criterion associated to each ophthalmic equipment of the considered reference dataset,
   * select, as a function of the second plurality of wearer parameters, a model among the plurality of models, and
   * determine, based on the selected model, at least an ophthalmic equipment.

According to the invention, different models are used for determining at least an ophthalmic equipment. The different models take into account the parameters relative to the wearer and the satisfaction level relative to a given ophthalmic equipment. The models used may predict the level of satisfaction of a given equipment depending on the wearer parameters or determine the ophthalmic equipment based on the level of satisfaction of a given ophthalmic equipment, which is for example inversely proportional to the return rate, depending on the value of the wearer parameters. The different models take into account different parameters of the wearer. The method of the invention is thus more flexible with regard to the wearer parameters collected from the given wearer.

### Brief description of the drawings

Further details, aspects and embodiments of the proposed solution will be described, by way of example only, with reference to the drawings.
Figure 1 illustrates the method of determining an ophthalmic equipment according to an embodiment.
Figure 2 illustrates an embodiment of a system for determining at least a component of an ophthalmic equipment according to an embodiment.

### Description:

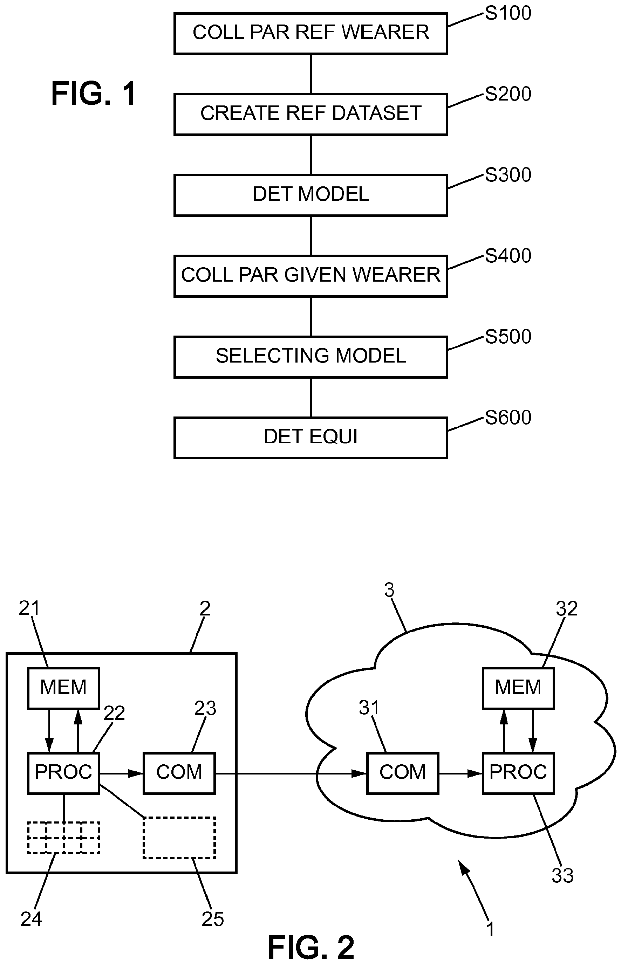

Figure 1 illustrates the method of determining an ophthalmic equipment according to an embodiment.

The method comprises a step S100 of collecting, for a plurality of reference wearers having worn at least an ophthalmic equipment of the set of predetermined ophthalmic equipments, a first plurality of wearer parameters values, at least an ophthalmic equipment parameter value and a value of at least an evaluation criterion associated to said ophthalmic equipment.

Advantageously, the ophthalmic equipment may be defined by the set of ophthalmic equipment parameter values.

Advantageously, the step S100 may comprise, collecting, for each reference wearer, a set of wearer parameters values, at least a parameter value of an ophthalmic equipment and a value of an evaluation criterion associated to the ophthalmic equipment defined by the at least an ophthalmic equipment parameter value.

The collected data may also comprise the parameters corresponding to the parameter values.

The wearer parameters may be at least chosen among:
- an age,
- a gender,
- an ethnics group,
- an employment,
- physiological parameters such as a pupil diameter, a pupil distance, an eye length, an eye color,
- prescription data such as the sphere, cylinder, axis, addition, prism value and prism base,
- visual or postural behavior parameters such as reading distance, reading gaze lowering, headcape, head-eye coefficient, dominant eye, hand laterality
- data relative to a sensitivity such as contrast sensitivity, distortion sensitivity, light sensitivity,
- data relative to other ophthalmic equipments worn by the reference wearer,
- data relative to an activity performed or intended to be performed by the wearer,
- environmental parameters such as the light level or the humidity level.

The at least an ophthalmic equipment parameter may be a product name or one or more parameters defining the ophthalmic equipment.

According to an embodiment, the at least an ophthalmic equipment parameter is chosen among one or more of:
- an ophthalmic lens parameter, being for example:
   ∘ a lens reference,
   ∘ geometry parameters: lens base, minimum edge thickness, thinning prism type and value, lens contour,
   ∘ a lens type chosen among unifocal lens, progressive lens, bifocal lens, trifocal lens, or a lens adapted for a predetermined activity,
   ∘ a lens geometry type chosen among:
      ▪ "traditional" wherein the front surface of the lens is the progressive surface and the rear surface is a sphero-toric surface adjusted in order to satisfy the wearer's far vision prescription.
      ▪ "full back side" wherein the front surface of the lens is spherical and the rear surface is a complex surface comprising the power progression as well as the far vision prescription,
      ▪ "dual addition": wherein the front surface of the lens is a progressive surface whose addition is less than the prescribed addition and the rear surface is a complex surface comprising the remaining part of the addition as well as the far vision prescription.
   ∘ lens designs chosen:
      - as a function of the progression length of the design. For example, a "regular design" has a progression length of 17 mm. A "short design" has a progression length of 14 mm. An "ultra-short design" has a progression length of 12 mm. Inbetween progression length values are also available (typically from 14 mm to 18 mm),
      - as a function of inset,
      - as a function of the value of the astigmatism peaks in comparison to the addition power. For example, a "soft" design typically has astigmatism peaks that are lower than the addition power. The result is less swim effect, usually at the expense of reduced fields of view. For example, a "hard" design typically has astigmatism peaks that are higher than the addition power. The benefit is larger fields of view, at the expense of higher swim effect.
   ∘ optical characteristics such as power and astigmatism maps, distortion maps,
- an optical filter parameter such as the type of filter (photochromic, polarizing), the spectral characteristics, the composition, the reference,
- an ophthalmic lens treatment parameter such as a parameter of a post-treatment layer such as the type of lens treatment (antireflection coating, hydrophobic treatment, anti-fog treatment, anti-scratch treatment), the composition, the reference,
- a frame parameter such as a frame material and/or a frame design parameter such as the lens shape, the wrap angle, the pantoscopic angle,
- a parameter of a head-mounted display design such as a position of the displayed content on the ophthalmic lens,
- a parameter relative to the type and/or the control mode of an active lens whose transmission or tint may be varied depending on the voltage applied, the active lenses comprising electrochromics or liquid crystal cells.

Accordingly, the ophthalmic equipment parameter may be chosen among one or more of:
- an ophthalmic lens parameter,
- an optical filter parameter,
- a lens treatment parameter,
- a frame parameter,
   - a head-mounted display design parameter,
   - a parameter relative to the type and/or the control mode of an active lens.

The evaluation criterion may correspond for example to a level of satisfaction, of perceived quality, of performance associated to an ophthalmic equipment defined by at least an ophthalmic equipment parameter. The level of satisfaction, performance or quality may be relative to an acuity, a comfort when reading, an adaptation time, a clarity of vision, a glare reduction, a color vision, an easiness to explore an environment of the wearer, a visual fatigue, for example. The evaluation criteria may have different values corresponding to a score.

The evaluation criterion may also be whether the reference wearer returned the ophthalmic equipment after having worn it. A return rate may be inferred for each ophthalmic equipment based on the value of the wearer parameters.

The value of the evaluation criterion may be collected directly from a feedback of the wearer or from a measurement. The feedback of the wearer may be collected directly through an application placed in his smartphone, or from a survey, by giving a score, for example. The value of the evaluation criterion may be collected based on a measurement performed by sensors. For example, the measurements performed by sensors comprised in smart-frames may relate to the time while moving head before reaching an optimal vision area through the lens, a wearing duration, the number of times the eyeglasses are removed and then put back on or a good head posture avoiding neck pain. According to an embodiment, the wearer parameters and/or their value may be collected for each reference wearer through an analysis of the digital content of the wearer. The digital content of the wearer may comprise the data saved in the memory of the smartphone and/or the data relative to the online activities of the wearer on the internet and/or the data retrieved from the sensors of so-called smart-frames, for example.

The method further comprises a step S200 of creating a plurality of reference datasets, each reference dataset comprising a subset of the first plurality of wearer parameters values of step S100, the at least an ophthalmic equipment parameter value collected in step S100 and the value of the at least an evaluation criterion collected in step S100. Each subset of the first plurality of wearer parameters may be different for each reference dataset.

Advantageously, each reference dataset may comprise, for a subset of the plurality of reference wearers, a subset of the wearer parameters values, the at least a parameter value of an ophthalmic equipment and the value of the at least an evaluation criterion collected in step S100.

The subset of the plurality of reference wearers may comprise a part or all of the reference wearers of the plurality of reference wearers.

Advantageously, for a given reference dataset, the subset of wearer parameters, the at least a parameter of an ophthalmic equipment and the at least an evaluation criterion associated to said ophthalmic equipment are identical for each reference wearer. Only the values of the wearer parameters, ophthalmic equipment parameters and evaluation criterion may differ depending on the reference wearer considered.

Only the subset of wearer parameters is different for each reference dataset. The subset of wearer parameters may comprise part or all of the wearer parameters.

In step S300, for each reference dataset created in step S200, a model intended to be used to determine at least an ophthalmic equipment, is determined. The model is determined based on the subset of the first plurality of wearer parameters values, the collected at least an ophthalmic equipment parameter value and the value of the at least a collected evaluation criterion. Advantageously, depending on the wearer parameters considered in each reference dataset, a different model is determined.

The step S300 may comprise determining a model for predicting the value of at least an evaluation criterion, for example the level of satisfaction, as a function of the at least one ophthalmic equipment parameter value and the subset of the first plurality of wearer parameters values of the considered reference dataset.

In other words, the model may be a model for predicting the value of at least an evaluation criterion for a given ophthalmic equipment defined by its ophthalmic equipment parameters values based on the wearer parameters values of the reference dataset considered. The model for predicting at least an evaluation criterion may be one of a decision tree, a neuronal network, gradient boosting for example. The model may be obtained through machine learning on each reference dataset for example.

Alternatively, the step S300 may comprise establishing a decision tree attributing to a new set of wearer parameters at least an ophthalmic equipment defined by its at least an ophthalmic equipment parameter according to the score of an ophthalmic equipment for the new set of wearer parameters.

A decision tree comprises nodes and leaves, the nodes corresponding to conditions on the wearer parameters and the leaves corresponding to at least an ophthalmic equipment defined by at least an ophthalmic equipment parameter. Each leave is reached when a particular set of conditions on the wearer parameters are met. The at least an ophthalmic equipment corresponding to a leaf is determined based on the value of the score of an ophthalmic equipment, when all the conditions on the wearer parameters defined by the nodes are fulfilled.

The step S300 may further comprise a preliminary step of evaluating a score for each ophthalmic equipment for at least a given subset of the first plurality of wearer parameters. When the evaluation criterion concerns an information on whether the considered reference wearer returned the ophthalmic equipment, it is thus possible to evaluate a return rate for a particular ophthalmic equipment defined by particular values of the ophthalmic equipment parameters as a function of the wearer parameters. The return rate is inversely proportional to the satisfaction level.

The method further comprises a step S400 of collecting, for a given wearer, a second plurality of wearer parameter. The second plurality of wearer parameters may comprise a list of wearer parameters and a plurality of values taken by the wearer parameters.

As described before, the wearer parameters may be collected directly from the wearer or from a measurement. The wearer parameters may also be collected from the digital content of the wearer. The digital content of the wearer comprises for example, the data comprised within the smartphone of the wearer.

The method further comprises a step S500 of selecting, as a function of the second plurality of wearer parameters collected in step S400, a model among the models associated to the plurality of reference datasets.

As described before, each model is associated to a particular reference dataset and enables to determine at least an ophthalmic equipment based on the wearer parameters considered. Thus, in order to select a model for determining at least an ophthalmic equipment, the list of parameters of each subset of the first plurality of wearer parameters is compared to the list of parameters of the second plurality of wearer parameters. The model corresponding to the reference dataset that best matches the list of parameters of the second plurality of wearer parameters is chosen.

The method further comprises a step S600 of determining at least an ophthalmic equipment based on the model selected in step S500.

When the model selected is a model for predicting the value of the at least an evaluation criterion as described before, step S600 may comprise calculating, for a plurality of ophthalmic equipments having different ophthalmic equipment parameter values, at least a value of an evaluation criterion based on said selected model and selecting one or more ophthalmic equipments having different ophthalmic equipment parameter values based on the calculated evaluation criteria.

When the model selected is a decision tree, step S600 may comprise implementing the decision tree on the second plurality of wearer parameters to determine at least one ophthalmic equipment.

Further, when a plurality of ophthalmic equipments are determined, an ophthalmic equipment may be selected among the plurality of determined ophthalmic equipments. This selection may be performed by the eyecare professional.

Some of the steps of the method of figure 1 are illustrated below with two different examples.

### Example 1: determining an ophthalmic equipment based on a prediction model:

In this example, three reference datasets B1, B2, B3 are created in step S200.

The three reference datasets are based on the data collected in step S100 and may comprise, for each reference wearer, a set of wearer parameters values, an ophthalmic equipment reference value and a value of a satisfaction level of said ophthalmic equipment.

The reference datasets are created based on the data collected for a plurality of reference wearers by selecting, among a subset of reference wearers for which data was collected, a subset of wearer parameters values.

The reference dataset B1 comprises the following parameters for each reference wearer:
- a set of wearer parameters such as :
   ∘ a prescription,
   ∘ a fitting height,
   ∘ a pupillary distance,
   ∘ a head-eye coefficient,
   ∘ an average of time spent outdoor per day obtained from the GPS localization data of the smartphone of the wearer,
   ∘ an average of time spent to read on the smartphone of the wearer,
- an ophthalmic equipment name or reference,
- a satisfaction level of the wearer with the given equipment.

An example of the values comprised in the reference dataset B1 is illustrated below:

**Table 1: reference dataset B1**

| Values of the parameters come from the wearer n° # | prescription | fitting height | pupillary distance | head-eye coefficient | average of time spent outdoor per day | average of time spent to read smart phone | equipment name | satisfaction of the wearer with the given equipment |
|---|---|---|---|---|---|---|---|---|
| Wearer n°1 | SV +2d 0d 0° | H1 | D1 | C1 | T1 | Ts1 | Eyezen | 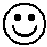 |
| Wearer n°2 | PAL | H2 | D2 | C2 | T2 | Ts2 | Varilux X series | 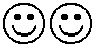 |
| Wearer n°3 | SV, +2d -1d 30° | H3 | D3 | C3 | T3 | Ts3 | Eyezen | 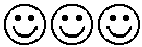 |

EYEZEN® corresponds to an ophthalmic lens comprising an additional power in the lower part of the ophthalmic lens which corresponds to the part of the lens that is used for viewing in the very near field such as when using a tablet or a smartphone. The ophthalmic lens further comprises an optical filter that is adapted for protecting the eyes from blue-violet light emitted by the screen of the tablets and smartphones for example.

VARILUX® X series® corresponds to a progressive ophthalmic lens comprising an extended near vision zone in which, for the same viewing angle, objects being at different distances may be seen accurately among others.

Only the data relative to the reference wearers n°1, 2 and 3 are included within the reference dataset B1.

The reference dataset B2 comprises the following parameters for each selected reference wearer:
- a set of wearer parameters such as :
   ∘ a prescription,
   ∘ a fitting height,
   ∘ a pupillary distance,
   ∘ a reading behavior,
   ∘ an average of time spent outdoor per day obtained from the GPS localization data of the smartphone of the wearer,
   ∘ an average of time spent to read on the smartphone of the wearer,
   ∘ an average intensity (measured in lux) received per day calculated based on the amount of light received by a luminosity sensor of the smartphone of the wearer,
   ∘ time spend at near work,
- an ophthalmic equipment name or reference,
- a satisfaction level of the wearer with the given equipment.

An example of the values comprised in the reference dataset B2 is illustrated below:

**Table 2: reference dataset B2**

| Values of the parameters come from the wearer n° # | prescription | fitting height | pupillary distance | Reading behaviour | average of time spent outdoor per day | average of time spent to read smart phone | average of lux received per day | time spend at near work | equipment name | satisfaction of the wearer with the given equipment |
|---|---|---|---|---|---|---|---|---|---|---|
| Wearer n°1 | SV +2d 0d 0° | H1 | D1 | B1 | T1 | Ts1 | Lux1 | tn1 | Eyezen | 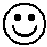 |
| Wearer n°2 | PAL | H2 | D2 | B2 | T2 | Ts2 | Lux2 | tn2 | Varilux X series | 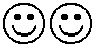 |
| Wearer n°4 | SV, +1d-1d 30° | H4 | D4 | B4 | T4 | Ts4 | Lux4 | tn4 | Cristal vision | 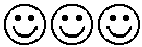 |

It may be noted that a crystal vision lens corresponds to a single vision lens.

It may be noted that the reference dataset B2 comprises some wearer parameters which are not comprised in the reference dataset B1 such as the reading behavior, the average intensity received per day and the amount of time spent at near work. Also, some wearer parameters of the reference dataset B1 are not comprised in the reference dataset B2 such as the fitting height.

Only the reference wearers n°1, 2 and 4 are included as the reference parameters of the wearer n°3 do not comprise some of the wearer parameters considered in the reference dataset B2.

The reference dataset B3 comprises the following parameters for each reference wearer:
- a set of wearer parameters such as:
   ∘ data relative to previous equipments worn by the reference wearer such as the ophthalmic equipment name and the associated satisfaction level,
- the name or reference of the currently worn ophthalmic equipment,
- a satisfaction level of the wearer with the currently worn ophthalmic equipment.

An example of the values comprised in the reference dataset B3 is illustrated below:

**Table 3: reference dataset B3**

| Values of the parameters come from the wearer n° # | prescription | Previous equipment name 1 | Previous equipment satisfaction 1 | Previous equipment name 2 | Previous equipment satisfaction 2 | Current equipment name | satisfaction of the wearer with the given equipment |
|---|---|---|---|---|---|---|---|
| Wearer n°1 | SV +2d 0d 0° | Cristal Vision | 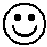 | Cristal Vision | 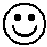 | Eyezen | 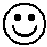 |
| Wearer n°3 | PAL | Cristal Vision | 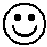 | Varilux X series | 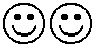 | Varilux X series | 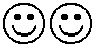 |
| Wearer n°4 | SV, +1d -1d 30° | Cristal Vision | 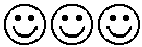 | Cristal Vision | 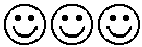 | Cristal vision | 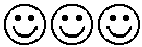 |

Only the reference wearers n°1, 3 and 4 are included as the reference parameters of the wearer n°2 do not comprise some of the wearer parameters considered in the reference dataset B3.

For each reference dataset, a model for predicting the satisfaction level of a wearer having the given equipment is determined as described previously above with reference to step S300. For example, a model M1 for predicting the wearer satisfaction as a function of the prescription, fitting height, pupillary distance, head-eye coefficient, time spent outdoor, time spent to read smart phone and equipment name is determined. A model M2 for predicting the wearer satisfaction as a function of the prescription, fitting height, pupillary distance, reading behavior, time spent outdoor, time spent to read smart phone, average intensity, time spent at near work and equipment name is determined. A model M3 for predicting the wearer satisfaction as a function of the previously worn ophthalmic equipments and their satisfaction level as well as the current equipment name is determined.

Then, for a given wearer, a second plurality of wearer parameters and their corresponding value is collected for a given wearer and a model is selected determined based on the second plurality of wearer parameters.

For example, if the second plurality of wearer parameters correspond to a prescription, fitting height, pupillary distance, head-eye coefficient, average of time spent outdoor per day, average time spent to read smart the smartphone, the model M1 is selected as all the wearer parameters of the reference dataset B1 are comprised within the second plurality of wearer parameters of the given wearer.

For another wearer, for which only the previously worn equipment names and associated levels of satisfaction are known, the model M3 is selected.

The ophthalmic equipment is then determined by calculating, for each of the ophthalmic equipments (Eyezen, Varilux X series, Cristal Vision), the value of the level of satisfaction using the selected model and by selecting the ophthalmic equipment having the maximum level of satisfaction.

### Example 2: determining an ophthalmic equipment based on a decision tree:

According to another embodiment, the ophthalmic equipment may be determined based on a decision tree.

In this example, two reference datasets are created in step S200.

The reference dataset B1 comprises the following parameters for each reference wearer:
- a set of wearer parameters such as :
   ∘ a prescription,
   ∘ a fitting height,
   ∘ a pupillary distance,
   ∘ a head-eye coefficient,
   ∘ an average of time spent outdoor per day obtained from the GPS localization data of the smartphone of the wearer,
   ∘ an average of time spent to read on the smartphone of the wearer,
- an ophthalmic equipment name or reference,
- a value of an evaluation criterion.

The reference dataset B2 comprises the same parameters as the reference dataset B1 and further comprises, for each reference wearer, the age and the gender of the reference wearers.

In step S300, a decision tree is established for each of the reference datasets B1 and B2. Each decision tree DT1, DT2 enables, for a new wearer having wearer parameters corresponding to the set of wearer parameters of the reference database B1 or B2, respectively, to attribute an ophthalmic equipment according to the score of an ophthalmic equipment for the new set of wearer parameters.

In particular, the ophthalmic equipment is determined based on the score of the ophthalmic equipment when all the conditions on the wearer parameters defined by the nodes of the considered decision tree are fulfilled.

When the evaluation criterion corresponds to a level of satisfaction, of perceived quality, of performance associated to an ophthalmic equipment defined by at least an ophthalmic equipment parameter, the value of the evaluation criterion corresponds to the score of the ophthalmic equipment. In that case, the ophthalmic equipment that is determined corresponds to the maximum of level of satisfaction, perceived quality or performance reached when all the conditions on the wearer parameters are fulfilled.

When the evaluation criterion corresponds to an indication on whether the reference wearer returned the ophthalmic equipment after having worn it or not, the score of the ophthalmic equipment corresponds to a return rate of the ophthalmic equipment. In that case, the ophthalmic equipment that is determined corresponds to the minimum of the return rate when all the conditions on the wearer parameters are fulfilled.

As previously described, the decision tree DT1, DT2 to implement is chosen as a function of the wearer parameters available for a new wearer, for whom the ophthalmic equipment is to be determined.

When the set of wearer parameters of a new wearer comprises a prescription, a fitting height, a pupillary distance, a head-eye coefficient, an average of time spent outdoor per day obtained from the GPS localization data of the smartphone of the wearer, an average of time spent to read on the smartphone of the wearer, the decision tree DT1 is implemented to determine the ophthalmic equipment.

When the set of wearer parameters of a new wearer comprises a prescription, a fitting height, a pupillary distance, a head-eye coefficient, an average of time spent outdoor per day obtained from the GPS localization data of the smartphone of the wearer, an average of time spent to read on the smartphone of the wearer, the age and the gender of the wearer, the decision tree DT2 is implemented to determine the ophthalmic equipment.

Figure 2 illustrates an embodiment of a system for determining at least a component of an ophthalmic equipment according to an embodiment.

The system 1 comprises a collecting unit 2 and a centralized treatment unit 3. The collecting unit 2 is configured to collect, for a given wearer, the second plurality of wearer parameters. The collecting unit 2 may comprise a memory 21, a processor 22, a communication interface 23, and optionally a keyboard 24 and a display 25. According to an embodiment, the second plurality of wearer parameters are obtained from a questionnaire which is stored in the memory 21 and displayed by the display 25 using instructions stored in the memory 21 and executed by the processor 22. The answers of the given wearer are entered using the keyboard 24, for example, and are processed by the processor 22 in order to send them to the centralized treatment unit 3 via the communication interface. According to another embodiment, the second plurality of wearer data is obtained from the digital content of the wearer. In that case, the memory 21 comprises a set of instructions enabling to provide access to the digital content of the wearer and to collect the second plurality of wearer parameters from the digital content of the wearer. The set of instructions is retrieved and executed by the processor 22. In some cases, the keyboard 24 may be used to collect a login and/or a password of the user on a social network for example. In other cases, the digital content of the wearer may be retrieved directly from data saved on a device of the wearer. The data may be retrieved by providing an access path which is saved in the memory.

The processor 22 is also configured to send the second plurality of wearer parameters to the centralized treatment unit 3 via the communication interface 23.

The centralized treatment unit 3 comprises a communication interface 31, a memory 32 and a processor 33.

The centralized treatment unit 3 is configured to:
- receive from the collecting unit 2 the second plurality of wearer parameters via its communication interface 31, and
- load, a plurality of models intended to be used to determine at least an ophthalmic equipment, each model being associated to a reference dataset and each model being determined based on the subset of the first plurality of wearer parameters, the at least one ophthalmic equipment parameter and the value of the at least an evaluation criterion associated to each ophthalmic equipment of the considered reference dataset,
- select, as a function of the second plurality of wearer parameters, a model among the plurality of models, and
- determine, based on the selected model, at least an ophthalmic equipment.

A corresponding set of instructions is stored in the memory 32 and executed by the processor 33.

It may be noted that the collecting unit 2 may be a smartphone or a tablet, in which case, the keyboard is replaced by a keypad, or a computer. The centralized treatment unit 3 is then a server connected to the collecting unit via the internet. Preferably, the server is part of a cloud network.

## Claims

1. Method for determining an ophthalmic equipment among a set of predetermined ophthalmic equipments for a given wearer, the method comprising:
- collecting (S100), for a plurality of reference wearers having worn at least an ophthalmic equipment of the set of predetermined ophthalmic equipments, a first plurality of wearer parameters values, at least an ophthalmic equipment parameter value and a value of at least an evaluation criterion associated to said ophthalmic equipment,
- creating a plurality of reference datasets (S200), each reference dataset comprising a subset of the first plurality of wearer parameters values, the collected at least one ophthalmic equipment parameter value and the collected value of the at least an evaluation criterion associated to each ophthalmic equipment, each subset of the first plurality of wearer parameters being different for each reference dataset,
- for each of the reference datasets, determining, based on the subset of the first plurality of wearer parameters values, the collected at least one ophthalmic equipment parameter value and the collected value of the at least an evaluation criterion associated to each ophthalmic equipment, a model intended to be used to determine at least an ophthalmic equipment (S300),
- collecting, for a given wearer, a second plurality of wearer parameters (S400),
- selecting, as a function of the second plurality of wearer parameters, a model among the models associated to the plurality of reference datasets (S500),
- based on the selected model, determining at least an ophthalmic equipment (S600).

2. The method of claim 1, wherein:
- determining a model for each of the reference datasets (S300) comprises:
* determining a model for predicting the value of at least an evaluation criterion as a function of at least one ophthalmic equipment parameter and the subset of the first plurality of wearer parameters of the considered reference dataset, and
- determining at least an ophthalmic equipment comprises (S600):
* calculating, for a plurality of ophthalmic equipments having different ophthalmic equipment parameter values, at least a value of an evaluation criterion based on said selected model,
* selecting one or more ophthalmic equipments having different ophthalmic equipment parameter values based on the calculated evaluation criterion.

3. The method of any of claims 1 or 2, wherein the method further comprises determining a plurality of ophthalmic equipments and selecting, an ophthalmic equipment among the plurality of the determined ophthalmic equipments.

4. The method of claim 1, wherein:
- determining a model for each of the reference datasets (S300) comprises:
* evaluating a score for each ophthalmic equipment for at least a given subset of the first plurality of wearer parameters,
* establishing a decision tree attributing to a new set of wearer parameters at least an ophthalmic equipment according to the score of an ophthalmic equipment for the new set of wearer parameters,
- determining at least an ophthalmic equipment based on the selected model (S600) comprises:
* implementing the decision tree on the second plurality of wearer parameters to determine at least one ophthalmic equipment.

5. The method of any of the preceding claims, wherein collecting a first plurality of wearer parameters (S100) and/or collecting a second plurality of wearer parameters (S400) comprises:
- providing access to digital content of the wearer,
- analyzing the digital content of the wearer so as to extract wearer parameters.

6. The method of any of the preceding claims, wherein the at least an ophthalmic parameter value and the value of at least an evaluation criterion associated to said ophthalmic equipment relate to a currently worn ophthalmic equipment and wherein the first and the second plurality of wearer parameters comprise data relative to previously worn ophthalmic equipments .

7. The method of any of the preceding claims, wherein the evaluation criterion corresponds to a level of satisfaction, of perceived quality, of performance associated to an ophthalmic equipment.

8. The method of any of the preceding claims, wherein the value of the evaluation criterion is collected directly from a feedback of the wearer or from a measurement.

9. The method of any of the preceding claims, wherein the first and the second plurality of wearer parameters are at least chosen among:
- age,
- gender,
- ethnics,
- employment,
- physiological parameters,
- postural behavior parameters,
- prescription data,
- visual behavior parameters,
- data relative to a sensitivity of the wearer
- data relative to other ophthalmic equipments worn by the given wearer,
- data relative to an activity performed or intended to be performed by the wearer,
- environmental parameters.

10. The method of any of the preceding claims, wherein the at least an ophthalmic equipment parameter is chosen among one or more of:
* an ophthalmic lens parameter
* an optical filter parameter,
* a lens treatment parameter,
* a frame parameter,
* a parameter of a head-mounted display design,
* a parameter relative to the type and/or the control mode of an active lens.

11. Computer program comprising one or more stored sequence/s of instructions that is accessible to a processor and which, when executed by the processor, causes the processor to carry out the steps of the method according to any of claims 1 to 10.

12. Storage medium storing one or more stored sequence/s of instructions of the computer program of claim 11.

13. System for determining an ophthalmic equipment among a set of predetermined ophthalmic equipments, the system being configured to implement the method of any of claims 1 to 10 and comprising:
- a collecting unit (2) configured to collect, for a given wearer, the second plurality of wearer parameter, and
- a centralized treatment unit (3) configured to:
- receive from the collecting unit the second plurality of wearer parameters,
- load, a plurality of models intended to be used to determine at least an ophthalmic equipment, each model being associated to a reference dataset and each model being determined based on the subset of the first plurality of wearer parameters, the at least one ophthalmic equipment parameter and the value of the at least an evaluation criterion associated to each ophthalmic equipment of the considered reference dataset,
- select, as a function of the second plurality of wearer parameters, a model among the plurality of models, and
- determine, based on the selected model, at least an ophthalmic equipment.
